# EUROPÄISCHE PATENTSCHRIFT

(11) **EP 0 386 469 B1**
(45) Veröffentlichungstag und Bekanntmachung des Hinweises auf die Patenterteilung: **13.04.1994**
(21) Anmeldenummer: 90102171.7
(22) Anmeldetag: 03.02.1990
(51) Int. Cl.: F03B 11/00, F04D 29/04

(54) **Turbomaschine mit Planetenradgetriebe**
Turbine with a planetary gear transmission
Turbine à transmission par engrenages planétaires

(30) Priorität: 04.03.1989 DE 3907058
(43) Veröffentlichungstag der Anmeldung: 12.09.1990
(73) Patentinhaber: ATLAS COPCO ENERGAS GMBH, D-50971 Köln (DE)
(72) Erfinder: Bosen, Werner, D-5000 Köln 90 (DE); Denz, Hans-Dieter, D-5354 Weilerswist-Metternich (DE)
(74) Vertreter: Andrejewski, Walter

(56) Entgegenhaltungen:
- CH-A- 370 862

## Beschreibung

Die Erfindung betrifft eine Turbomaschine mit Getriebegehäuse, Laufrad, Zapfen und einem Planetenraggetriebe mit umlaufendem Hohlrad, Sonnenrad und mindestens drei Planetenrädern, die auf mit dem Gehäuse verbundenen Bolzen drehbar gelagert sind, wobei das Laufrad und das Sonnenrad fest miteinander zu einem Nabenrotor verbunden sind, wobei der Zapfen aus einem rückwärtigen, dicken Einspannzapfenteil sowie einem vorkragenden, verjüngten Lagerzapfenteil besteht, der durch einen Zapfenabsatz an den Einspannzapfenteil anschließt, und wobei der verjüngte Lagerzapfenteil in eine Lagerbohrung des Nabenrotors eingreift.

Bei der US-A-2 845 054 bekannten Getriebeanordnung einer Turbomaschine, von der die Erfindung ausgeht, ist der Zapfen drehfest mit dem Nabenrotor verbunden und durch Wälzlager, die beidseits des Sonnenrades angeordnet sind, am Getriebegehäuse abgestützt. Auch das Hohlrad ist unter Zwischenschaltung von Wälzlagern am Getriebegehäuse gelagert. Die bekannte Lagerung hat einen beachtlichen Platzbedarf. Nachteilig ist ferner, daß durch die Wälzlagerung des Nabenrotors am Getriebegehäuse die Lagerabstände in bezug auf den Lagerrad- bzw. Rotorschwerpunkt festliegen und praktisch nicht veränderbar sind. Zumindest sind erhebliche Umbauten am Getriebe und insbesondere am Getriebegehäuse erforderlich. Bei vorgegebener Betriebsdrehzahl, vorgegebenem Gewicht und Massenträgheit des Laufrades bestehen nur noch geringe konstruktive Möglichkeiten, um die Lage der kritischen Drehzahlen zu beeinflussen. Dies führt zu beachtlichen Zwängen bei der konstruktiven Gestaltung der Turbomaschine.

Die bekannten Turbomaschinen, insbesondere radialer Bauart, arbeiten in der Praxis im überkritischen Betrieb, verbunden mit hohen Lager-Umfangsgeschwindigkeiten. Bei der überkritischen Betriebsweise, verbunden mit hohen Lagerumfangsgeschwindigkeiten, kann eine ausreichende Lebensdauer des Planetengetriebes nur dann gewährleistet werden, wenn ölgeschmierte und ölgekühlte Gleitlager für die Lagerung des Nabenrotors verwenden werden. Ölgemschierte Gleitlager erzeugen bei den in Turbomaschinen erforderlichen großen Umfangsgeschwindigkeiten erhebliche Reibverlustleistungen, die einerseits den Wirkungsgrad des Planetengetriebes und damit der gesamten Turbomaschine negativ beeinflussen und andererseits eine aufwendige Kühl- und Schmierölversorgung nach sich ziehen.

Der Erfindung liegt die Aufgabe zugrunde, eine Turbomaschine des beschriebenen Aufbaus zu schaffen, die sich durch einfache und kompakte Bauweise auszeichnet und vor allem ohne Änderung des konstruktiven Aufbaus insgesamt auf einfache Weise eine konstruktive Beeinflussung der kritischen Drehzahlen möglich macht.

Die Aufgabe wird bei einer Turbomaschine des eingangs beschriebenen Aufbaus erfindungsgemäß dadurch gelöst, daß der Zapfen und das Hohlrad des Planetenradgetriebes durch ein Wälzlager drehbar verbunden sind, welches auf dem rückwärtigen Einspannzapfenteil des Zapfens angeordnet ist, und daß zwischen dem verjüngten Lagerzapfenteil des Lagerzapfens und dem Nabenrotor ein weiteres Lager angeordnet ist, wobei der Lagerabstand des weiteren Lagers in einem Bereich, der das 0,4- bis 1,2-fache des ebenfalls von dem Zapfenabsatz aus gemessenen Schwerpunktabstandes des Nabenrotor-Schwerpunktes beträgt, festlegbar ist mit der Maßgabe, daß die Betriebsdrehzahl in einem sicheren Abstand von benachbarten kritischen Drehzahlen liegt.

Bei der erfindungsgemäßen Konstruktion ist eine zweite Lagerstelle auf dem verjüngten Lagerzapfenteil nicht erforderlich. Das zwischen drei Planetenräder eingesetzte Sonnenrad funktioniert nicht nur als Antriebsbauteil, sondern dient gleichzeitig als Lagerstelle für den Nabenrotor. Bei vorgegebener Betriebsdrehzahl sind die kritischen Drehzahlen durch die Abmessungen des Lagerzapfenteiles der Mittelachse sowie des Nabenrotors (Länge, Wandstärke, Durchmesser) veränderbar. Im übrigen besteht die Möglichkeit, durch die Wahl des Lagerabstandes (LL) im angegebenen, erfindungsgemäßen Bereich die kritische Drehzahl zu beeinflussen. Im Ergebnis sind die kritischen Drehzahlen bei der konstruktiven Auslegung durch einfache konstruktive Maßnahmen, die den grundsätzlichen Aufbau nicht berühren, in weiten Bereichen beeinflußbar. Aus den kritischen Drehzahlen resultierende konstruktive Zwänge sind bei der erfindungsgemäßen Turbomaschine nicht mehr gegeben. Es lassen sich vielmehr akzeptable kritische Drehzahlen bei relativ geringen Lager-Umfangsgeschwindigkeiten realisieren. Das hat zur Folge, daß anstelle der in der Praxis erforderlichen ölgeschmierten Gleitlager Wälzlager, insbesondere vorgespannte Schrägkugellager (Spindellager), für die Lagerung des schnellaufenden Nabenrotors einsetzbar sind. Wenngleich es im Rahmen der Erfindung liegt, an der Lagerstelle auf dem verjüngten Lagerzapfenteil ein Gleitlager anzuordnen und die Turbomaschine oberhalb der ersten kritischen Drehzahl und bei hohen Lager-Umfangsgeschwindigkeiten zu betreiben, so sieht die bevorzugte Ausführungsform der Erfindung jedoch vor, daß die den Nabenrotor abstützende Lagerstelle zumindest ein Wälzlager aufweist und daß der Lagerabstand mit den Abmessungen der Mittelachse und des Nabenrotors derart abgestimmt ist, daß die Betriebsdrehzahl in einem sicheren Abstand von benachbarten kritischen Drehzahlen liegt. Diese Ausführungsform, bei der auf den Einsatz von Gleitlagern ganz verzichtet wird, zeichnet sich durch einen besonders einfachen Aufbau aus, was sich vorteilhaft bezüglich der Investitionskosten und der Betriebskosten hinsichtlich geringer Verlustleistungen niederschlägt. Der Nabenrotor kann auf verschiedene Weise konstruktiv verwirklicht sein. Eine Ausführung sieht vor, daß das Laufrad und das Sonnenrad auf eine Hohlwelle angeordnet sind, die an der Lagerstelle abgestützt ist. Bei sehr hohen Betriebsdrehzahlen der Turbomaschine kann es erforderlich sein, durch Minimierung der Laufradbohrung die Tangentialspannung am Bohrungsrand im zulässigen Bereich zu halten. In einem solchen Fall ist eine erfindungsgemäße Ausgestaltung vorteilhaft, bei der an das Laufrad einstückig eine Hülse angeformt ist, mit der das Sonnenrad unmittelbar verbunden ist. Im Rahmen dieser Ausgestaltung liegt es, das Sonnenrad auf die Hülse des Laufrades aufzuschieben oder aber auch, das Sonnenrad im wesentlichen stirnseitig an die Hülse des Laufrades anzuschließen. Es versteht sich, daß die erfindungsgemäße Turbomaschine sowohl als Turboverdichter als auch als Expansionsturbine einsetzbar ist. Insbesondere ist die erfindungsgemäße Turbomaschine mit einem Radiallauf ausgerüstet.

Im folgenden wird die Erfindung anhand einer lediglich ein Ausführungsbeispiel darstellenden Zeichnung ausführlicher erläutert. Es zeigen in schematischer Darstellung
- Fig. 1: einen Axialschnitt durch eine erfindungsgemäße Turbomaschine,
- Fig. 2: eine weitere Ausführungsform eines erfindungsgemäßen Nabenrotors.

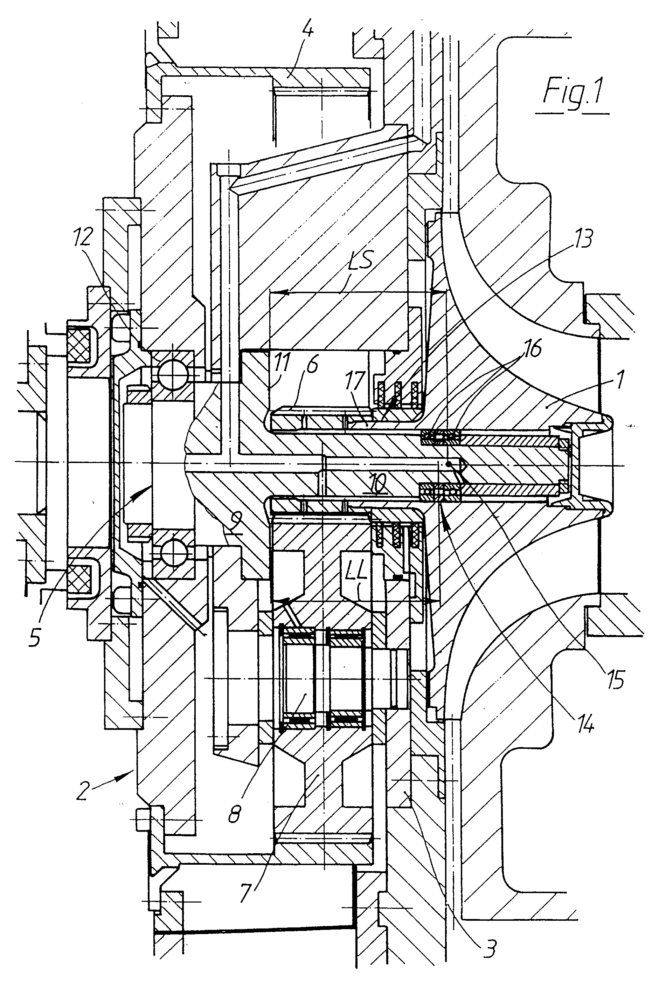

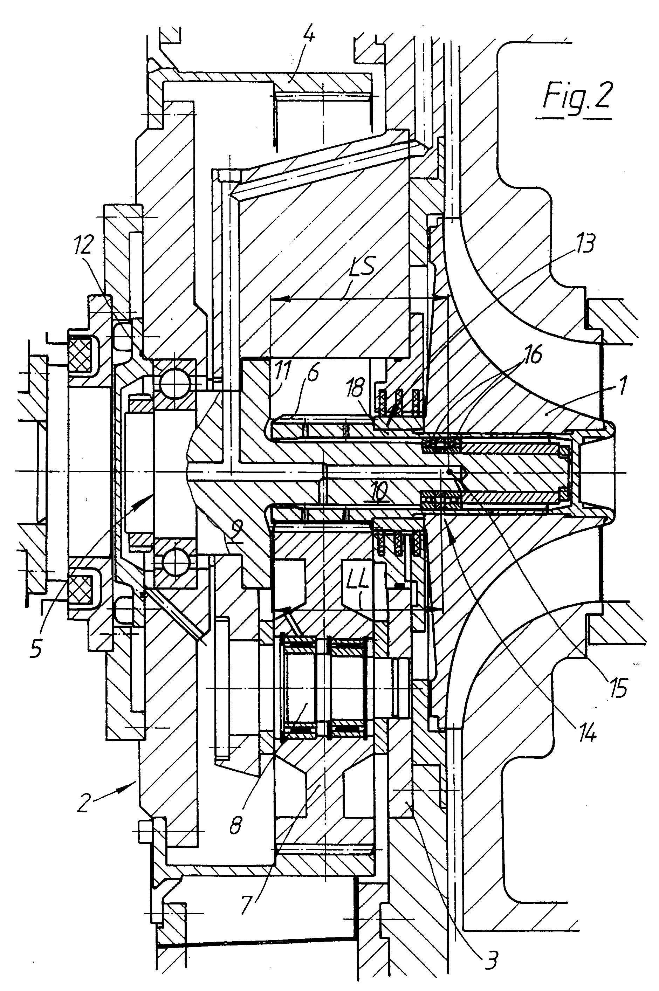

Zum grundsätzlichen Aufbau gehören ein fliegend angeordnetes Laufrad 1 und ein Planetenradgetriebe 2 mit Getriebegehäuse 3, umlaufendem Hohlrad 4, Mittelachse 5, Sonnenrad 6 und mindestens drei Planetenrädern 7 (Fig. 1 und 2). Die Planetenräder 7 sind auf Bolzen 6 drehbar gelagert, welche mit dem Getriebegehäuse 3 verbunden sind. Die Mittelachse 5 ist als Zapfen mit einem Einspannzapfenteil 9 und einem vorkragenden, verjüngten Lagerzapfenteil 10 ausgebildet. Der Einspannzapfenteil 9 weist einen relativ großen Durchmesser auf und schließt über den Zapfenabsatz 11 an den verjüngen Lagerzapfenteil 10 an. Im Bereich des Einspannzapfenteils 9 ist das Hohlrad 4 mittels eines Wälzlagers 12 drehbar gelagert. Das Laufrad 1 und das Sonnenrad 6 sind fest miteinander zu einem Nabenrotor 13 verbunden und an einer Lagerstelle 14 an der Mittelachse 5 drehbar gelagert. Die Lagerstelle 14 ist auf dem verjüngten Lagerzapfenteil 10 in einem Lagerabstand LL von dem Zapfensatz 11 des Einspannzapfenteiles angeordnet. Der Lagerabstand LL beträgt das 0,4- bis 1,2-fache des ebenfalls vom Zapfenabsatz 11 aus gemessenen Schwerpunktabstandes LS des Nabenrotor-Schwerpunktes 15. Nabenrotor-Schwerpunkt meint den Massenschwerpunkt des aus Laufrad und Sonnenrad gebildeten Nabenrotors 13.

Die den Nabenrotor abstützende Lagerstelle 14 ist im Ausführungsbeispiel und nach bevorzugter Ausführungsform mit Wälzlagern ausgerüstet, wobei der Lagerabstand LL mit den Abmessungen der Mittelachse 5 und des Nabenrotors 13 derart abgestimmt ist, daß die Betriebsdrehzahl der Turbomaschine in einem sicheren Abstand von benachbarten kritischen Drehzahlen liegt. Im Ausführungsbeispiel ist die Lagerstelle 14 mit zwei Kugellagern 16 gelagert. Zweckmäßigerweise werden vorgespannte Schrägkugellager eingesetzt, d. h. Präzisionskugellager mit geringer Lagerluft, die in axialer Richtung vorgespannt und dadurch gleichsam spielfrei laufen. Im Ausführungsbeispiel und nach bevorzugter Ausführungsform ist an das Laufrad 1 einstückig eine Hülse 17 angeformt, mit der das Sonnenrad 6 unmittelbar verbunden ist. Diese Ausführungsform ist günstig für sehr große Betriebsdrehzahlen der Turbomaschine. Wenn das Laufrad 1 kleineren Fliehkräften ausgesetzt ist, hat es sich im übrigen auch bewährt, das Laufrad 1 und das Sonnenrad 6 auf einer Hohlwelle 18 anzuordnen, die an der vorzugsweise mit Wälzlagern ausgerüsteten Lagerstelle 14 abgestützt ist (Fig. 2).

## Patentansprüche

1. Turbomaschine mit
Getriebegehäuse (3),
Laufrad (1),
Zapfen (5) und
einem Planetenradgetriebe (2) mit umlaufendem Hohlrad (4), Sonnenrad (6) und mindestens drei Planetenrädern (7), die auf mit dem Gehäuse (3) verbundenen Bolzen (8) drehbar gelagert sind,
wobei das Laufrad (1) und das Sonnenrad (6) fest miteinander zu einem Nabenrotor (13) verbunden sind, wobei der Zapfen (5) aus einem rückwärtigen, dicken Einspannzapfenteil (9) sowie einem vorkragenden, verjüngten Lagerzapfenteil (10) besteht, der durch einen Zapfenabsatz (11) an den Einspannzapfenteil (9) anschließt, und wobei der verjüngte Lagerzapfenteil (10) in eine Lagerbohrung des Nabenrotors (13) eingreift, **dadurch gekennzeichnet**, daß der Zapfen (5) und das Hohlrad (4) des Planetenradgetriebes (2) durch ein Wälzlager (12) drehbar verbunden sind, welches auf dem rückwärtigen Einspannzapfenteil (9) des Zapfens (5) angeordnet ist, und daß zwischen dem verjüngten Lagerzapfenteil (10) des Lagerzapfens (5) und dem Nabenrotor (13) ein weiteres Lager (16) angeordnet ist, wobei der Lagerabstand (LL) des weiteren Lagers (16) in einem Bereich, der das 0,4- bis 1,2-fache des ebenfalls von dem Zapfenabsatz (11) aus gemessenen Schwerpunktabstandes (LS) des Nabenrotor-Schwerpunktes (15) beträgt, festlegbar ist mit der Maßgabe, daß die Betriebsdrehzahl in einem sicheren Abstand von benachbarten kritischen Drehzahlen liegt.

2. Turbomaschine nach Anspruch 1, dadurch gekennzeichnet, daß das Lager (16) zwischen dem Nabenrotor (13) und dem Lagerzapfenteil (10) aus zumindest einem Wälzlager besteht.

3. Turbomaschine nach Anspruch 1 oder 2, dadurch gekennzeichnet, daß das Laufrad (1) und das Sonnenrad (6) auf einer Hohlwelle (18) angeordnet sind.

4. Turbomaschine nach Anspruch 1 oder 2, dadurch gekennzeichnet, daß an das Laufrad (1) einstückig eine Hülse (17) angeformt ist, mit der das Sonnenrad (6) unmittelbar verbunden ist.

## Claims

1. A turbomachine with
a transmission housing (3),
a rotor (1),
a journal (5) and
a planetary gear transmission (2) with a surrounding ring gear (4), a sun wheel (6) and at least three planet wheels (7) which are rotatably mounted on studs (8) attached to the housing (3),
wherein the rotor (1) and the sun wheel (6) are rigidly attached to each other to form a hub rotor (13), wherein the journal (5) consists of a thick, rear journal mounting portion (9) and a projecting, diminished bearing journal portion (10) which is joined to the journal mounting portion (9) by means of a journal shoulder (11), and wherein the diminished bearing journal portion (10) engages in a bearing bore in the hub rotor (13), characterised in that the journal (5) and the ring gear (4) of the planetary gear transmission (2) are rotatably connected by means of a rolling bearing (12) which is disposed on the rear journal mounting portion (9) of the journal (5), and that an additional bearing (16) is disposed between the diminished bearing portion (10) of the bearing journal (5) and the hub rotor (13), wherein the bearing distance (LL) of the additional bearing (16) can be fixed within a range which is 0.4 to 1.2 times the distance (LS) of the hub rotor centre of gravity (15), which distance of the centre of gravity is likewise measured from the journal shoulder (11), on condition that the operating rotational speed is situated at a safe interval from the adjacent critical rotational speeds.

2. A turbomachine according to claim 1, characterised in that the bearing (16) between the hub rotor (13) and the bearing journal portion (10) consists of at least one rolling bearing.

3. A turbomachine according to claim 1 or 2, characterised in that the rotor (1) and the sun wheel (6) are disposed on a hollow shaft (18).

4. A turbomachine according to claim 1 or 2, characterised in that a bushing (17), to which the sun wheel (6) is directly attached, is formed on the rotor (1) in one piece.

## Revendications

1. Turbine à transmission par engrenages, comprenant un carter d'engrenages (3), une roue mobile (1), un tourillon (5) et un engrenage planétaire (2) avec une couronne tournante (4), une roue solaire (6) et au moins trois roues planétaires (7) qui sont montées de manière tournante sur des axes (8) solidaires du carter (3), la roue mobile (1) et la roue solaire (6) étant solidarisées de manière à former un rotor sur moyeu (13), le tourillon (5) étant constitué par une section de queue de fixation (9) postérieure de grande épaisseur ainsi que par une section de tourillon diminuée (10) en saillie qui se raccorde à la section de queue de fixation (9) par un épaulement de tourillon (11), et la section de tourillon diminuée (10) s'engageant dans un alésage de roulement du rotor sur moyeu (13), **caractérisée par le fait** que le tourillon (5) et la couronne (4) de l'engrenage planétaire (2) sont couplés de manière tournante par un roulement (12) monté sur la section de queue de fixation (9) postérieure du tourillon (5), et qu'un palier supplémentaire (16) est disposé entre la section de tourillon diminuée (10) du tourillon (5) et le rotor sur moyeu (13), la distance (LL) du palier supplémentaire (16) qui est de l'ordre de 0,4 à 1,2 fois la distance (LS) du centre de gravité (15) du rotor sur moyeu, également mesurée à partir de l'épaulement (11) du tourillon, pouvant être fixée à la condition que la vitesse de régime se situe à une distance de sécurité des vitesses de rotation critiques voisines.

2. Turbine selon la revendication 1, caractérisée par le fait que le palier (16) entre le rotor sur moyeu (13) et la section de tourillon (10) est constitué par au moins un palier à roulement.

3. Turbine selon l'une des revendications 1 ou 2, caractérisée par le fait que la roue mobile (1) et la roue solaire (6) sont montées sur un arbre creux (18).

4. Turbine selon l'une des revendications 1 ou 2, caractérisée par le fait que la roue mobile (1) comporte une douille (17) conformée en une seule pièce avec celle-ci et avec laquelle la roue solaire (6) est couplée directement.
